# EUROPEAN PATENT SPECIFICATION

(11) **EP 2 403 222 B1**
(45) Date of publication and mention of the grant of the patent: **03.04.2013**
(21) Application number: 11171248.5
(22) Date of filing: 24.06.2011
(51) Int. Cl.: H04M 1/02, G06F 1/16

(54) **Mobile communication terminal with flexible display**
Mobiles Kommunikationsendgerät mit flexibler Anzeige
Terminal de communications mobile doté d'un affichage souple

(30) Priority: 30.06.2010 KR 20100062787
(43) Date of publication of application: 04.01.2012
(73) Proprietor: Pantech Co., Ltd., Seoul 121-792 (KR)
(72) Inventor: Seo, Mun Deock, 121-792 Seoul (KR)
(74) Representative: Herzog, Markus

(56) References cited:
- EP-A2- 2 360 517
- US-A1- 2007 069 975
- US-A1- 2008 158 795

## Description

### BACKGROUND

FIELD

This disclosure relates to a mobile communication terminal according to the preamble part of claim 1.

DISCUSSION OF THE BACKGROUND

A flip-type, or folder type, mobile communication terminal has a structure in which an upper main body and a lower main body are superimposed in a closed state. One end of the upper main body and one end of the lower main body are connected by a hinge member. A display, for example, a liquid crystal display (LCD) may be included in an inner surface, an outer surface, or both the inner surface and the outer surface of the upper main body.

In a general flip-type mobile communication terminal, since the size of the display is limited to the area of the upper main body, the size of the display may be smaller than desired.

If the size of the display is small, a user may feel inconvenienced if viewing various images, such as texts, movies, games, digital media broadcasts or moving images.

Furthermore, if a touch input function is included in the display, the size of an icon displayed on the display may be small. Thus, it may be difficult for the user to accurately touch the icon. Accordingly, a touch recognition error occurs and operability deteriorates.

US-A-2008/0158795 discloses an apparatus including a flexible display wrapping itself around a roller or being guided into an open area running laterally along a first panel.

EP-A-2 360 517 discloses an apparatus including a soft display wherein one part out of its entire surface area is exposed at the top of the housing so that it may be pushed and pulled inside the housing.

US-A-2007/0069975 discloses an apparatus including a flexible display with a retracting apparatus retracting and storing the flexible display which may cover an upper display region and a lower display region.

### SUMMARY OF THE INVENTION

It is an object of the invention to provide a mobile communication terminal with a flexible display continuously held in a tight state without being folded or bent. This object is achieved by the mobile communication terminal having the features of claim 1.

Preferred embodiments of the terminal are defined in subclaims 2 to 13.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a perspective view illustrating a mobile communication terminal including a flexible display in a closed state according to an exemplary embodiment of the invention.

FIG. 2 is a cross-sectional view illustrating a mobile communication terminal including a flexible display in a closed state according to an exemplary embodiment of the invention.

FIG. 3 is a perspective view illustrating a mobile communication terminal including the flexible display in an opened state according to an exemplary embodiment of the invention.

FIG. 4 is a cross-sectional view illustrating a mobile communication terminal including the flexible display in an opened state according to an exemplary embodiment of the invention.

FIG. 5 is a perspective view illustrating a length-adjusting assembly connected to the flexible display according to an exemplary embodiment of the invention.

FIG. 6 is a partial cross-sectional view taken along line C-C of FIG. 3 according to an exemplary embodiment of the invention.

FIG. 7 is a cross-sectional view illustrating a mobile communication terminal including a flexible display in a closed state according to an exemplary embodiment of the invention.

FIG. 8 is a cross-sectional view illustrating a mobile communication terminal including a flexible display in an opened state according to an exemplary embodiment of the invention.

FIG. 9 is a perspective view illustrating a length-adjusting assembly connected to the flexible display according to an exemplary embodiment of the invention.

### DETAILED DESCRIPTION OF THE ILLUSTRATED EMBODIMENTS

The invention is described more fully hereinafter with reference to the accompanying drawings, in which exemplary embodiments are shown. This invention may, however, be embodied in many different forms and should not be construed as limited to the embodiments set forth herein. Rather, these exemplary embodiments are provided so that this disclosure will be thorough and will fully convey the scope of the invention to those skilled in the art. It will be understood that when an element is referred to as being "on" or "connected to" or "coupled to" another element, it can be directly on, directly connected to, or directly coupled to the other element, or intervening elements may be present. Throughout the drawings and the detailed description, unless otherwise described, the same drawing reference numerals are understood to refer to the same elements, features, and structures. The relative size and depiction of these elements may be exaggerated for clarity, illustration, and convenience.

The terminology used herein is for the purpose of describing particular embodiments only and is not intended to be limiting of this disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

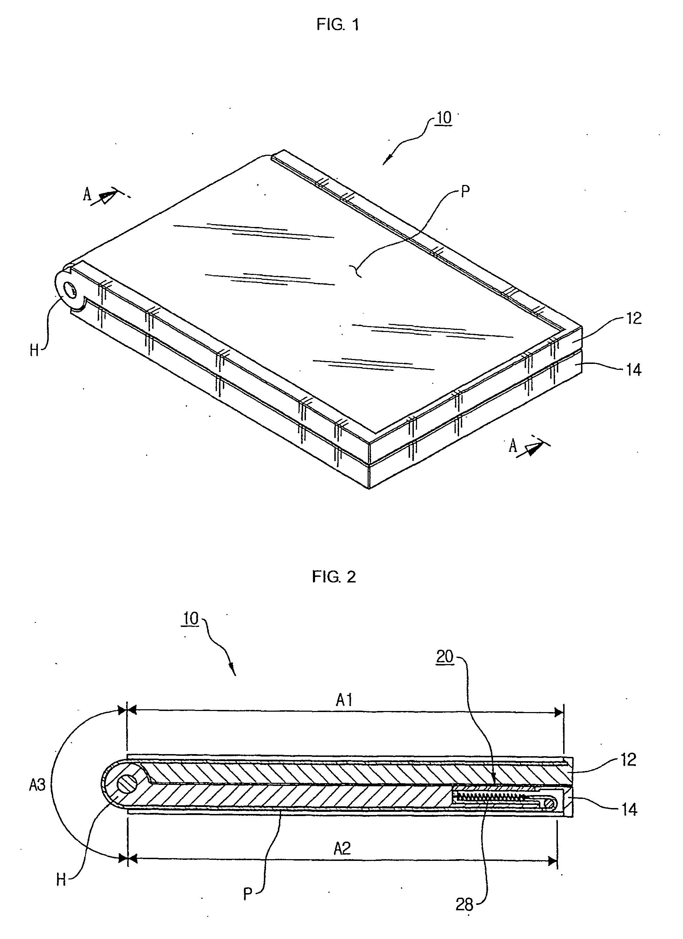

FIG. 1 is a perspective view illustrating a mobile communication terminal including a flexible display in a closed state according to an exemplary embodiment of the invention. FIG. 2 is a cross-sectional view illustrating a mobile communication terminal including a flexible display in a closed state according to an exemplary embodiment of the invention. FIG. 2 is a cross-sectional view taken along line A-A of FIG. 1.

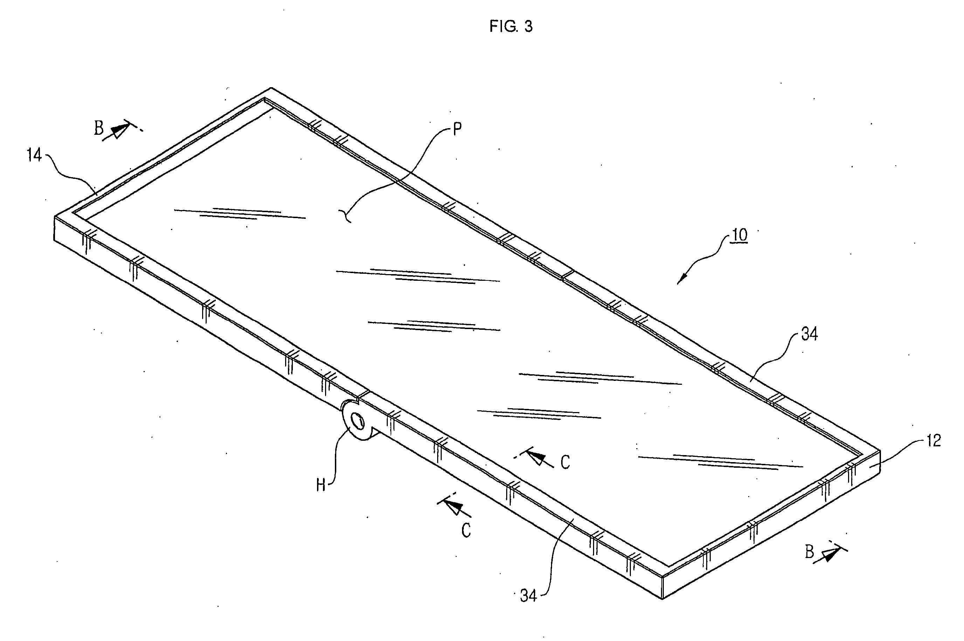

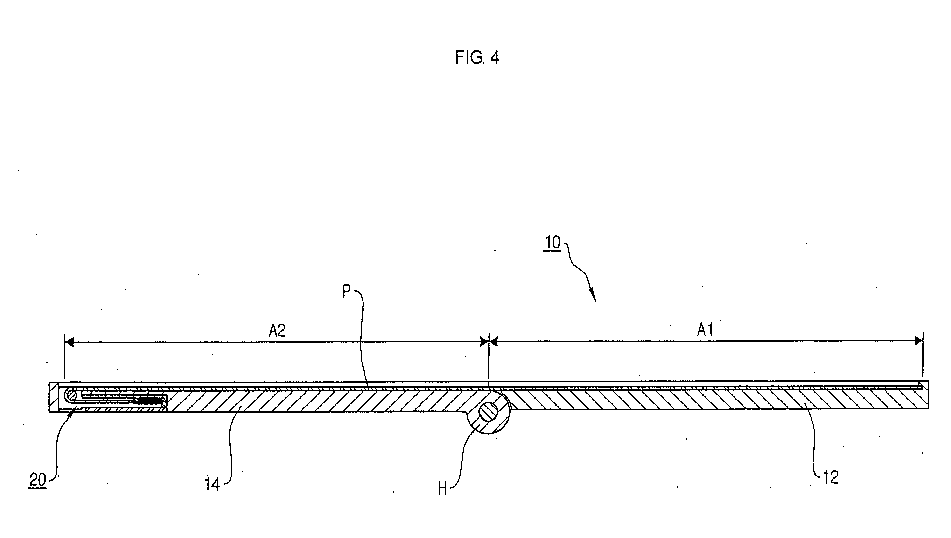

FIG. 3 is a perspective view illustrating a mobile communication terminal including the flexible display in an opened state according to an exemplary embodiment. FIG. 4 is a cross-sectional view illustrating a mobile communication terminal including the flexible display in an opened state according to an exemplary embodiment of the invention. FIG. 4 is a cross-sectional view taken along line B-B of FIG. 3.

As shown in FIG. 1 and FIG. 2, in the flip-type mobile communication terminal 10, at respective first ends of an upper main body 12 and a lower main body 14 are rotatably connected by a hinge member H.

The flip-type mobile communication terminal 10 may be in a closed state, an open state, and states there between. The closed state may be provide a structure, in which the upper main body 12 and the lower main body 14 are superimposed, in the closed state as illustrated in FIG. 1 and FIG. 2. The open state may provide a structure, in which the upper main body 12 and the lower main body 14 are horizontally unfolded, in the opened state as illustrated in FIG. 3 and FIG. 4.

As shown in FIG. 2 and FIG. 4, a length-adjusting assembly 20 is provided on a distal end of the lower main body 14, opposite from the hinge member H, according to an exemplary embodiment of the invention.

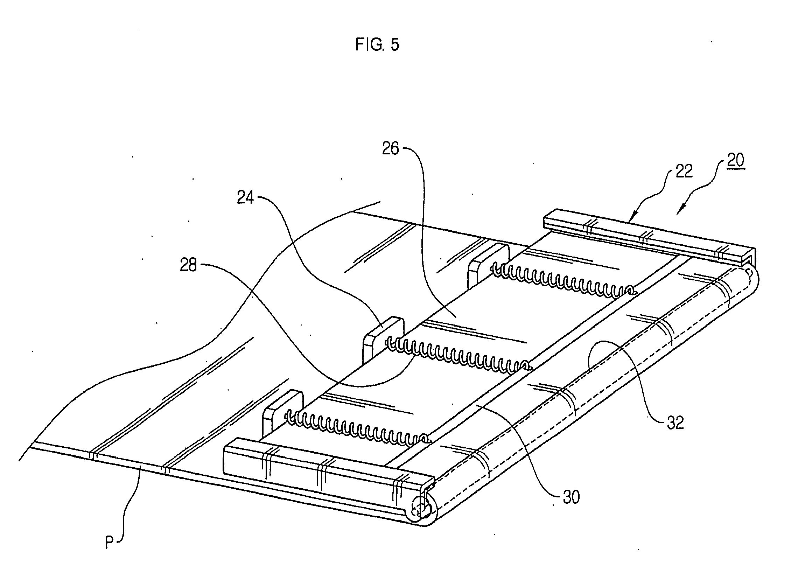

FIG. 5 is a perspective view illustrating the length-adjusting assembly 20 according to an exemplary embodiment of the invention.

As shown in FIG. 5, the length-adjusting assembly 20 includes an assembly main body 22 coupled to the lower main body 14. Although, not shown in this figure, the mobile terminal may include one or more assembly main body 22, and may further be coupled to different parts of the mobile terminal. For example, each of the upper main body 12 and the lower main body 14 may include a length adjustable assembly 20. In addition, the assembly main body 22 may be coupled and fixed to a specific location within the mobile terminal or may be adjusted in its location.

The assembly main body 22 includes a wall portion 24 disposed vertically at one side of the assembly main body 22, a horizontal portion 26 butted against the wall portion 24, and a biasing member 28 arranged across the horizontal portion 26 in a direction of the length adjustment of a flexible display P. The assembly main body 22 further includes a connection member 30 connected to one end of the flexible display P, and a guide member 32 guiding a sliding movement of the flexible display P on the horizontal portion 26. The biasing member 28 is connected between the wall portion 24 and the connection member 30 to adjust the length of the flexible display P.

In an example, a compression spring may be used as the biasing member 28 and a rotatable roller may be used as the guide member 32. Accordingly, the biasing member 28 may be extended if more of the flexible display P is desired, for example, if the terminal 10 is in a closed state. Further, the biasing member 28 may be contracted if less of the flexible display P is desired, for example, if the terminal 10 is in an open state.

Although the biasing member 28 is described as extending during the closed state and contracting during the open state of the mobile terminal 10, the biasing member 28 may also be designed to contract during the closed state and extend during the open state of the mobile terminal 10. For simplicity of disclosure, the biasing member 28 will be described as using a pulling mechanism, which may extend moving towards a closed state and contract as the terminal 10 moves towards the opened state.

As shown in FIG. 2, the flexible display P may be connected from the distal end of the lower main body 14 opposite from the hinge member H, to a distal end of an upper main body 12 opposite from the hinge member H. The connected flexible display P may cover an upper display region A1, a lower display region A2, and an outer surface of a rotation region A3 of the hinge member H. That is, the flexible display P surrounds the upper and lower display regions A1 and A2 and the rotation region A3. Although not illustrated, the flexibly display P may also be connected at different parts of the lower main body 14 and upper main body 12 as well.

In an example, the flexible display P may be fixed to the upper display region A1. Flexible display P may be fixed by having an end of the flexible display P fixed to the upper display region A1, or the flexible display P portion covering the upper main body 12 may be fixed as a whole to the upper display region A1. Also, the length-adjusting assembly 20 may be located at the distal end of the upper main body 12 and flexible display P may be fixed to the lower display region A2. Further, the flexible display may not be fixed and be connected to another length-adjusting assembly 20 to provide length adjustment from both sides of the mobile terminal.

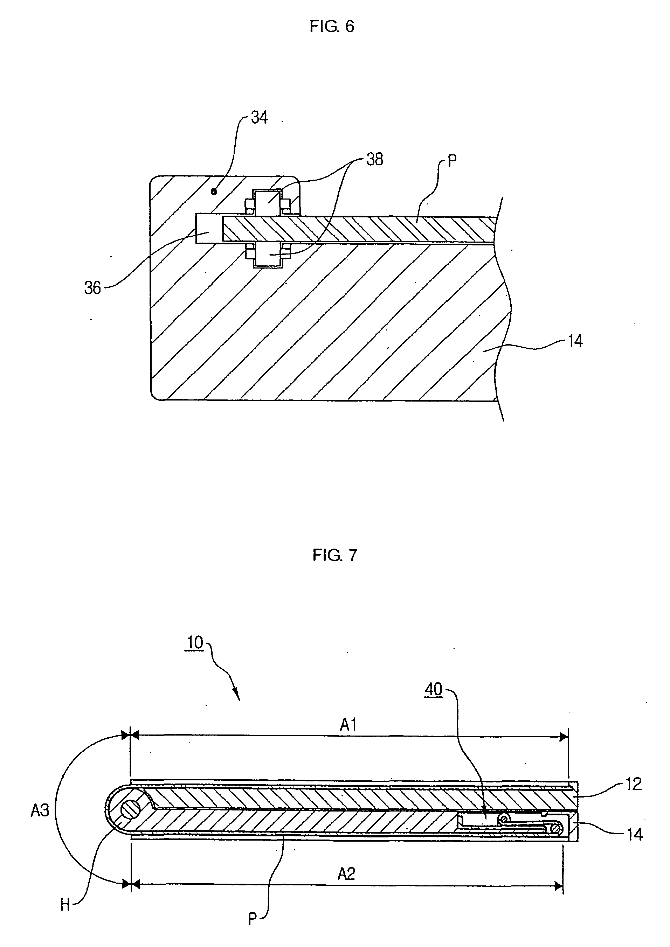

FIG. 6 is a partial cross-sectional view taken along line C-C of FIG. 3 according to an exemplary embodiment of the invention.

As shown in FIG. 6, guide portions 34 to guide both sides of the flexible display P placed in the lower display region A2 are formed or assembled on both sides of the lower main body 14 (see FIG. 3). Only side of the lower main body 14 is shown in FIG. 6 and the structures of the guide portions 34 assembled on both sides of the lower main body 14 may be similar in structure to each other.

Further, guide grooves 36 opened in the internal direction of the lower main body 14 are formed or assembled in the guide portions 34, and both sides of the flexible display P may be partially inserted into the guide grooves 36.

Accordingly, it is possible to reduce the risk of the flexible display P placed in the lower display region A2 from being deviated from both ends of the lower main body 14 or to reduce the risk of sliding failure if the length of the flexible display is adjusted.

Friction reducing members 38, with which the upper and lower surfaces of the flexible display P are in contact, are provided on the inner surfaces of the guide portions 34. More specifically, the friction reducing members 38 are located on the upper surface and the lower surface of the guide grooves 36 as illustrated in FIG. 6.

In an example, a material having a low frictional resistance may be used in the friction reducing members 38. Further, a roller, which can be rotated around a shaft, may be employed as the friction reducing members.

If the friction reducing members 38 are provided on the inner surfaces of the guide grooves 36, located in the guide portions 34, the flexible display P may smoothly slide along the guide grooves 36.

In an example, the mobile communication terminal including the flexible display P in a closed state may expose a rotation region A3 if the hinge member H is exposed between the upper and lower display regions A1 and A2. Accordingly, in the closed state, the biasing member 28 of the length-adjusting assembly 20 may extend by the length of the outer surface of the rotation region A3 (see FIG. 2), from the opened state (see FIG. 4). Although not illustrated, it is understood that the biasing member 28 may also be compressed in the opened state and extended in a closed state. Accordingly, the external exposure length (the length of the region A1 + the length of the region A2 + the length of the outer surface of the region A3) of the flexible display P in the closed state may be equal or greater than the exposure length in the opened state.

Since the biasing member 28 pulls (or pushes) the flexible display P toward the length-adjusting assembly 20 with restoring force to return to an original state if the flip-type mobile communication terminal 10 transitions from a closed state to an open state, the flexible display P may be continuously held in a tight state without being folded or bent.

In an example, in the opened state in which the upper main body 12 and the lower main body 14 are unfolded or generally planar, the rotation region A3 may not exposed between the upper and lower display regions A1 and A2 (see FIG. 4). Accordingly, in the opened state, the biasing member 28 may return to the original state by restoring force and the flexible display P may be pulled (or pushed) toward the length-adjusting assembly 20 by the length of the rotation region A3. Accordingly, the external exposure length (the length of the region A1 + the length of the region A2) of the flexible display P may be reduced as compared with the external exposure length of the closed state.

That is, the external exposure length of the flexible display P may be automatically adjusted by the length of the outer surface of the rotation region A3 as the flip-type mobile communication terminal 10 transitions from the opened state to the closed state.

According to the above configuration, the size of the flexible display P in the opened state may not be limited to the size of the upper main body but may be increased to the sum of the sizes of the upper main body and the lower main body. Accordingly, it may be possible to increase the size of the display of the flip-type mobile communication terminal.

The flexible display P according to an exemplary embodiment may be flexible. Examples of the flexible display P may include an organic light emitting diode (OLED), a plastic liquid crystal display (LCD), a plastic plasma display panel (PDP), an electronic ink panel, which is also called electronic paper, and other similar technologies. Further, all display panels having flexibility as well as an organic thin-film transistor (OTFT) may be used as the display member.

Whereas a biasing member 28 is included in the length-adjusting assembly 20 to adjust the length of the flexible display P in the above examples, a roll type winding portion 42 may be used to adjust the length of the flexible display P. Although exemplary embodiments are shown with biasing member 28 and a roll type winding portion 42 being used for the length-adjusting assembly 20, other embodiments may be implemented with similar mechanisms to adjust the length of the flexible display P.

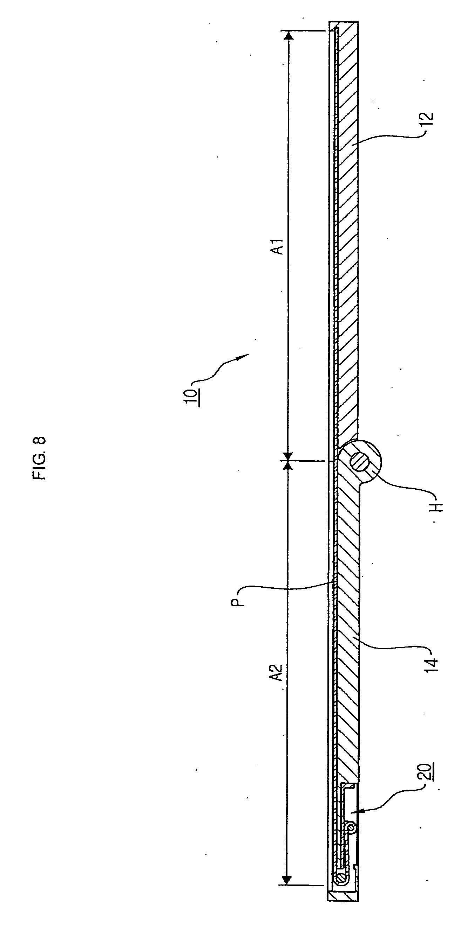

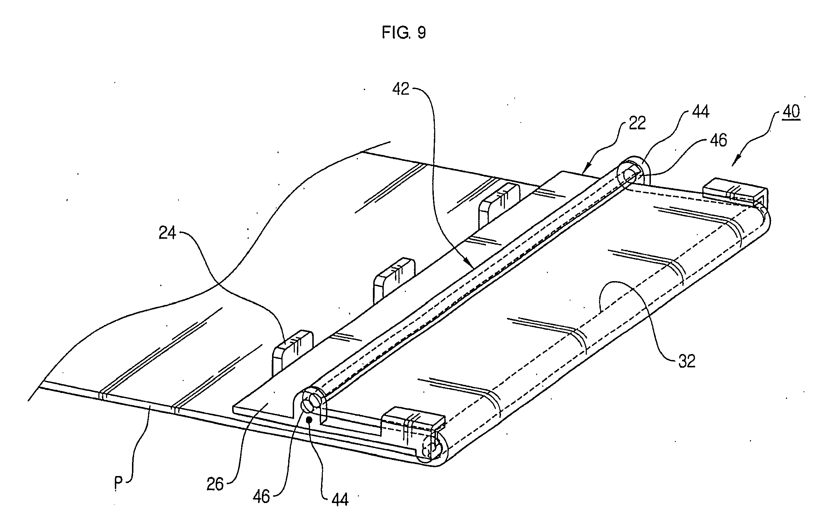

FIG. 7 and FIG. 8 are cross-sectional views showing a mobile communication terminal including a flexible display according to an exemplary embodiment of the invention. FIG. 7 shows a closed state and FIG. 8 shows an opened state. FIG. 9 is a perspective view showing a length-adjusting assembly according to an exemplary embodiment of the invention.

As shown in FIG. 7, in the flip-type mobile communication terminal 10, a length-adjusting assembly 40 is provided on a distal end of the lower main body 14 on an opposite from the hinge member H, in the closed state.

As shown in FIG. 9, the length-adjusting assembly 40 includes an assembly main body 22 coupled to the lower main body 14. Although not illustrated, the flip-type mobile communication terminal 10 may include more than one assembly main body 22, which may include same types or different types of length adjusting assembly 20 (i.e. multiple biasing types, multiple rolling types, or combination of both), and may be positioned at a different location of the flip-type mobile communication terminal 10. In addition, the assembly main body 22 may be fixed to a specific location within the flip-type mobile communication terminal 10 or may be adjusted in its location in the length adjusting operation.

The assembly main body 22 includes a wall portion 24 disposed vertically at on one side of the assembly main body 22, a horizontal portion 26 butted against the wall portion 24, the winding portion 42 placed in a perpendicular direction of the length adjustment of flexible display P and connected to one end of the flexible display P, and a guide member 32 assembled on one side of the horizontal portion 26 on an opposite side of the wall portion 24 to guide winding and unwinding of the flexible display P.

The winding portion 42 is coupled to hinge pins 46 of hinge portions 44 assembled on both sides of the assembly main body 22 so as to be rotated around the hinge pins 46.

Examples of the winding portion 42 may include a rotary actuator, a clockwork device, and an electric reel. A winding actuator which may automatically wind or unwind mechanically may also be used.

Accordingly, if the flip-type mobile communication terminal 10 is opened or closed, the external exposure length of the flexible display P may be adjusted by winding or unwinding of the flexible display P.

Since the structure of the guide portions 34, friction reducing members 38, and other remaining components of the present embodiment are equal to those of the above-described embodiment, those members are denoted by the same reference numerals and the description thereof will be omitted.

A flip-type mobile communication terminal includes a first main body, a second main body coupled to the first main body; a flexible display; a connection member connected to the flexible display; and a length-adjusting assembly to adjust length of the flexible display.

## Claims

1. A folder-type mobile communication terminal (10), comprising:
a first main body (12);
a second main body (14) connected to the first main body (12) by a hinge member (H);
a flexible display (P) connected to the first main body (12),
a length-adjusting assembly (30, 40) connected to the flexible display (P) and adapted to adjust the length of the flexible display, and
a guide member (32) adapted to guide length adjustment of the flexible display,
**characterized in that** the guide member (32) comprises:
a guide portion (34) having a guide groove (36) adapted to guide an edge of the flexible display (P); and
a friction reducing member (38) adapted to allow the flexible display (P) to slide through the guide grooves (36), the friction reducing member (38) provided in the guide portion (34) and the second main body (14), the Action reducing member (38) being in contact with first and second surfaces of the flexible display.

2. The terminal of claim 1, wherein the length-adjusting assembly (20) comprises an assembly main body (22) connected to the second main body (14), a wall portion (24) assembled on one side of the assembly main body, and a biasing member (28) configured to connect the wall portion (24) and the flexible display.

3. The terminal of claim 2, further comprising:
a connection member (30) connected to the flexible display (P), and
a biasing member (28) connected to the wall portion (24) and the connected member (30), the biasing member (28) preferably being a spring.

4. The terminal of claim 1. wherein the length-adjusting assembly (20, 40) provided on the second main body (14) and comprises an assembly main body (22) connected to the second main body (14) and a winding member (42) rotatably connected to a hinge portion (44) disposed on a side of the assembly main body (22) and connected to the flexible display (P).

5. The terminal according to claim 4, wherein a guide member (32) adapted to guide winding and unwinding of the flexible display (P) is provided on one side of the assembly main body (22).

6. The terminal according to claim 5, wherein the guide member (32) comprises a guide portion (34) having a guide groove (36) provided on a side of the second main body (14) and adapted to guide a side of the flexible display (P).

7. The terminal according to claim 6, wherein the guide member (32) further comprises a friction reducing member (38) provided in the guide portion (34).

8. The terminal according to claim 7, wherein the friction reducing member (38) is in contact with a surface of the flexible display (P).

9. The terminal according to any of claims 4 to 8, wherein the winding member (42) is comprised of a rotary actuator, a clockwork device or an electric reel.

10. The terminal according to any of claims 4 to 9, wherein the flexible display (P) is connected to at least a portion of a first display region (A1) of the first main body (12).

11. The terminal according to claim 1, wherein the length-adjusting assembly (20, 40) comprises:
a connection member (30) connected to the flexible display (P); and
a biasing member (28) connected to the connection member (30); and preferably further comprises:
a wall portion (24) disposed at one side of an assembly main body (22), and
a horizontal portion (26) adapted to butt against the wall portion (24).

12. The terminal according to claim 11, wherein the biasing member (28) comprises a spring adapted to contract and expand to adjust the length of the flexible display (P).

13. The terminal according to claim 11, wherein the biasing member (28) comprises a roll type winding member adapted to wind and unwind the flexible display (P) to adjust the length of the flexible display.

## Patentansprüche

1. Klappbares mobiles Kommunikationsendgerät (10), umfassend:
einen ersten Hauptkörper (12),
einen zweiten Hauptkörper (14), welcher mit dem ersten Hauptkörper (12) mittels eines Scharnierelements (H) verbunden ist,
eine flexible Anzeige (P), welche mit dem ersten Hauptkörper (12) verbunden ist,
eine Längeneinstellanordnung (20, 40), welche mit der flexiblen Anordnung (P) verbunden ist und angepasst ist, die Länge der flexiblen Anzeige einzustellen, und
ein Führungselement (32), welches angepasst ist, eine Längeneinstellung der flexiblen Anzeige zu führen,
**dadurch gekennzeichnet, dass** das Führungselement (32) umfasst:
einen Führungsabschnitt (34), welcher eine Führungsrille (36) aufweist, die angepasst ist, einen Rand der flexiblen Anzeige (P) zu führen, und
ein Reibungsminderungselement (38), welches angepasst ist; der flexiblen Anzeige (P) zu gestatten, durch die Führungsrille (36) zu gleiten, wobei das Reibungsminderungselement (38) in dem Führungsabschnitt (34) und dem zweiten Hauptkörper (14) bereitgestellt ist, wobei das Reibungsminderungselement (38) mit ersten und zweiten Flächen der flexiblen Anzeige in Kontakt steht.

2. Endgerät nach Anspruch 1,
wobei die Längeneinstellanordnung (20) einen Anordnungshauptkörper (22), welcher mit dem zweiten Hauptkörper (14) verbunden ist, einen Wandabschnitt (24), welcher an einer Seite des Anordnungshauptkörpers montiert ist, und ein Vorspannelement (28) umfasst, welches konfiguriert ist, den Wandabschnitt (24) und die flexible Anzeige zu verbinden.

3. Endgerät nach Anspruch 2, ferner umfassend:
ein Verbindungselement (30), welches mit der flexiblen Anzeige (P) verbunden ist, und
ein Vorspannelement (28), welches mit dem Wandabschnitt (24) und dem Verbindungselement (30) verbunden ist, wobei das Vorspannelement (28) vorzugsweise eine Feder ist.

4. Endgerät nach Anspruch 1,
wobei die Längeneinstellanordnung (20, 40) an dem zweiten Haputkörper (14) bereitgestellt ist, und einen Anordnungshauptkörper (22), welcher mit dem zweiten Hauptkörper (14) verbunden ist, und ein Wiklungselement (42) umfasst, welches mit einem Scharnierabschnitt (44) drehbar verbunden ist, welches an einer Seite des Anordnungshauptkörpers (22) angeordnet ist und mit der flexiblen Anzeige (P) verbunden ist.

5. Endgerät nach Anspruch 4,
wobei ein Führungselement (32), welches angepasst ist, ein Aufrollen und ein Abrollen der flexiblen Anzeige (P) zu führen, an einer Seite des Anordnungshauptkörpers (22) bereitgestellt ist.

6. Endgerät nach Anspruch 5,
wobei das Führungselement (32) einen Führungsabschnitt (34) umfasst, welcher eine Führungsrille (36) aufweist, die an einer Seite des zweiten Hauptkörpers (14) bereitgestellt ist und angepasst ist, eine Seite der flexiblen Anzeige (P) zu führen.

7. Endgerät nach Anspruch 6,
wobei das Führungselement (32) ferner ein Reibungsminderungselement (38) umfasst, welches in dem Führungsabschnitt (34) bereitgestellt ist.

8. Endgerät nach Anspruch 7,
wobei das Reibungsminderungselement (38) in Kontakt mit einer Fläche der flexiblen Anzeige (P) steht.

9. Endgerät nach einem der Ansprüche 4 bis 8,
wobei das Wiklungselement (42) aus einem Drehantrieb, eine Räderwerkvorrichtung oder einer elektrischen Spule besteht.

10. Endgerät nach einem der Ansprüche 4 bis 9,
wobei die flexible Anzeige (P) mit wenigstens einem Abschnitt eines ersten Anzeigebereichs (A1) des ersten Hauptkörpers (12) verbunden ist.

11. Endgerät nach Anspruch 1,
wobei die Längeneinstellanordnung (20, 40) umfasst:
ein Verbindungselement (30), welches mit der flexiblen Anzeige (P) verbunden ist; und
ein Vorspannelement (28), welches mit dem Verbindungselement (30) verbunden ist;
und vorzugsweise ferner umfasst:
einen Wandabschnitt (24), welcher an einer Seite eines Anordnungshauptkörpers (22) angeordnet ist, und
einen Horizontalabschnitt (26), welches angepasst ist an dem Wandabschnitt (24) zu liegen.

12. Endgerät nach Anspruch 11,
wobei das Vorspannelement (28) eine Feder umfasst, die angepasst ist, sich zusammen zu ziehen und zu expandieren, um die Länge der flexiblen Anzeige (P) einzustellen.

13. Endgerät nach Anspruch 11,
wobei das Vorspannelement (28) ein Wiklungselement vom Aufrolltyp umfasst, das angepasst ist, die flexible Anzeige (P) aufzuwickeln und abzuwickeln, um die Länge der flexiblen Anzeige einzustellen:

## Revendications

1. Terminal de communications mobile (10) du type dépliant, comprenant:
un premier corps principal (12),
un deuxième corps principal (14) qui est connecté au premier corps principal (12) par un élément de charnière (H),
un affichage souple (P) qui est connecté au premier corps principal (12),
un ensemble de réglage de longueur (20, 40) qui est connecté à l'affichage souple (P) et qui est adapté pour régler la longueur de l'affichage souple, et
un élément de guidage (32) qui est adapté pour guider le réglage de la longueur de l'affichage souple,
**caractérisé en ce que** l'élément de guidage (32) comprend:
une partie de guidage (34) comportant une rainure de guidage (36) adaptée pour guider un bord de l'affichage souple (P), et
un élément de réduction de frottement (38) adapté pour permettre à l'affichage souple (P) de glisser à travers les rainures de guidage (36), l'élément de réduction de frottement (38) étant prévu dans la partie de guidage (34) et le deuxième corps principal (14), l'élément de réduction de frottement (38) étant en contact avec les première et deuxième surfaces de l'affichage souple.

2. Terminal selon la revendication 1, dans lequel l'ensemble de réglage de longueur (20) comprend un corps principal d'assemblage (22) qui est connecté au deuxième corps principal (14), une partie de paroi (24) assemblée sur un côté du corps principal d'assemblage, et un élément de poussée (28) configuré de manière à connecter la partie de paroi (24) et l'affichage souple.

3. Terminal selon la revendication 2, comprenant en outre:
un élément de connexion (30) qui est connecté à l'affichage souple (P), et
un élément de poussée (28) qui est connecté à la partie de paroi (24) et à l'élément de connexion (30), l'élément de poussée (28) étant de préférence un ressort.

4. Terminal selon la revendication 1, dans lequel l'ensemble de réglage de longueur (20, 40) est prévu sur le deuxième corps principal (14) et comprend un corps principal d'assemblage (22) qui est connecté au deuxième corps principal (14), et un élément d'enroulement (42) qui est connecté de façon rotative à une partie de charnière (44) disposée sur un côté du corps principal d'assemblage (22) et connectée à l'affichage souple (P).

5. Terminal selon la revendication 4, dans lequel un élément de guidage (32) adapté pour guider l'enroulement et le déroulement de l'affichage souple (P) est prévu sur un côté du corps principal d'assemblage (22).

6. Terminal selon la revendication 5, dans lequel l'élément de guidage (32) comprend une partie de guidage (34) comportant une rainure de guidage (36) prévue sur un côté du deuxième corps principal (14) et adaptée pour guider un côté de l'affichage souple (P).

7. Terminal selon la revendication 6, dans lequel l'élément de guidage (32) comprend en outre un élément de réduction de frottement (38) qui est prévu dans la partie de guidage (34).

8. Terminal selon la revendication 7, dans lequel l'élément de réduction de frottement (38) est en contact avec une surface de l'affichage souple (P).

9. Terminal selon l'une quelconque des revendications 4 à 8, dans lequel l'élément d'enroulement (42) est constitué d'un actionneur rotatif, d'un mécanisme d'horloge ou d'une bobine électrique.

10. Terminal selon l'une quelconque des revendications 4 à 9, dans lequel l'affichage souple (P) est connecté à au moins une partie d'une première région d'affichage (A1) du premier corps principal (12).

11. Terminal selon la revendication 1, dans lequel l'ensemble de réglage de longueur (20, 40) comprend:
un élément de connexion (30) qui est connecté à l'affichage souple (P), et
un élément de poussée (28) connecté à l'élément de connexion (30),
et comprend de préférence en outre:
une partie de paroi (24) disposée à un côté d'un corps principal d'assemblage (22), et
une partie horizontale (26) adaptée pour buter contre la partie de paroi (24).

12. Terminal selon la revendication 11, dans lequel l'élément de poussée (28) comprend un ressort qui est adapté pour se contracter et se détendre afin de régler la longueur de l'affichage souple (P).

13. Terminal selon la revendication 11, dans lequel l'élément de poussée (28) comprend un élément d'enroulement de type rouleau qui est adapté pour enrouler et dérouler l'affichage souple (P) afin de régler la longueur de l'affichage souple.
